# EUROPÄISCHE PATENTANMELDUNG

(11) **EP 1 413 688 A1**
(43) Veröffentlichungstag der Anmeldung: **28.04.2004**
(21) Anmeldenummer: 03014820.9
(22) Anmeldetag: 30.06.2003
(51) Int. Cl.: E04B 1/82, C04B 28/00, G10K 11/162

(54) **Nichtbrennbare, feuchtigkeitsregulierende und schallabsorbierenden Formteile und Verfahren zu deren Herstellung**

(30) Priorität: 11.09.2002 DE 10241978
(71) Anmelder: Wilhelmi Werke Aktiengesellschaft, 35633 Lahnau (DE)
(72) Erfinder: Musebrink, Olav, 52391 Vettweiss (DE); Niedner, Peter, Dr., 83707 Bad Wiessee (DE)
(74) Vertreter: Tappe, Hartmut

(57) **Zusammenfassung**

Die Erfindung betrifft ein nicht brennbares, feuchtigkeitsregulierendes und schallabsorbierendes Formteil aus einem Füllstoff, gewählt aus einem Mineralschaumgranulat und / oder Blähglas und / oder expandiertem Mineral, umfassend eine Mischung aus wenigstens einem der vorgenannten Füllstoffe mit einer vorbestimmten Korn- bzw. Partikelgrößenverteilung und / oder einer vorbestimmten Porosität, wobei der wenigstens eine Füllstoff unter Verwendung eines nicht brennbaren, anorganischen Bindemittels oder Bindemittelgemischs, ggf. unter Einsatz von Hilfsstoffen, gebunden ist.

## Beschreibung

Die vorliegende Erfindung betrifft ein nicht brennbares, feuchtigkeitsregulierendes und schallabsorbierendes Formteil aus einem Mineralschaumgranulat und/oder Blähglas und/oder expandiertem Mineral..

Formteile, welche verschiedenste Funktionen und Eigenschaften aufweisen sind bereits seit langer Zeit bekannt und werden vielfältig z.B. als Wand- und Deckenverkleidung eingesetzt.

So offenbart die FR1473345A Zwischenwände, die thermische, schallabsorbierende und feuerbeständige Eigenschaften aufweisen. Hierbei werden verschiedene dem heutigen Stand nicht mehr entsprechende zellulare Kugeln mit minimaler Menge eines nicht näher bezeichneten Klebstoffs derart eingesetzt, dass die größtmöglichen Hohlräume entstehen. Die vorgenannte Offenbarung weist insbesondere durch die Verwendung möglichst großer Kugeln bzw. Hohlräume Nachteile im Hinblick auf die Absorption relevanter Schallfrequenzen auf und erzeugt durch die Verwendung großer Kugeln für Deckenplatten optisch wenig ansprechende Oberflächen.

Ferner ist aus der DE2739748A eine schallschluckende Platte bekannt, die auf der Schallseite eine robuste, luftdurchlässige Deckschicht aufweist, welche eine schallabsorbierende Schicht, insbesondere Faserschicht, wie z.B. Glasfaser- oder Steinwolleschicht, deckt, wobei die Deckschicht von Bestandteilen unterschiedlicher Größe und unterschiedlichen Gewichts gebildet wird, und die Bestandteile elastisch miteinander verbunden sind. Als elastisches Bindemittel wird hierbei insbesondere Polyurethan genannt, welches zwar schwer entflammbar ist, jedoch für den Einsatz in einer Innenverkleidung keine ausreichenden Brandschutz bereitstellt. Ferner besteht die Notwendigkeit besondere Arbeitsschutzanforderungen aufgrund der verwendeten Kunstoffe einzuhalten. Folglich ist eine solche Platte lediglich als Schallschutzplatte geeignet, stellt jedoch keinerlei weitere, insbesondere für den Einsatz im Innenbereich notwendigen Eigenschaften, z.B. Brandschutz, zur Verfügung.

Des weiteren ist in der Offenlegungsschrift AT384642B eine schalldämmende Verbundplatte aus Gummigranulat beschrieben. Diese Verbundplatten sind aufgrund des hohen Gewichtes nicht als Deckenplatten in handelsüblichen Hängesystemen geeignet, so dass hier kostenintensive Sonderanfertigungen erforderlich sind, und diese sind nicht bzw. nur in geringem Masse feuchtigkeitsregulierend, sowie ist eine Brandklasse A1 nicht erreichbar.

Ferner ist aus der FR2454491 A eine Platte bekannt, welche mittels Styroporkugeln und Blähglas unter Verwendung von Resolen als Bindemittel hergestellt wird. Da Resole üblicherweise geringe Anteile von freiem Formaldehyd und Phenol aufweisen, ist eine solche Platte insbesondere aufgrund der Ausdünstungen für den Einsatz in Innenräumen nicht geeignet. Darüber hinaus ist festzuhalten, dass Resole zwar eine hohe Wärmeformbeständigkeit aufweisen, jedoch hinsichtlich einer Regulierung der Feuchtigkeit und im Hinblick auf den Brandschutz in Innenräumen wegen der Zersetzungsprodukte Phenol und Formaldehyd nicht geeignet sind.

In der DE 39 16 799 A1 wird des weiteren eine Schallschluckplatte auf der Basis von anorganischen Teilchen in allgemeiner Art offenbart, die nur an den Berührungspunkten der Überzüge haftend miteinander verbunden sind, und Schallabsorptionskammem mit unterschiedlicher Größe einschließen. Hierbei ist die Platte aus mit einem temperaturfesten anorganischen oder organischen Bindemittel, insbesondere auf Epoxidharzbasis, verbundenen Blähglaskugeln bzw. -kömem gebildet. Die vorzugsweise Ausgestaltung erfolgt mit Expoxidharz und Styroporkugeln. Hierbei ist es erforderlich weitere Zusatzstoffe , insbesondere Metall,-, Kohle-, Polyester- oder Mineralwollfasem einzuführen um der solchermaßen hergestellten Platte die notwendige Stabilität zu verleihen. Ferner werden in die Platten Polystyrolkugeln eingeführt, welche während der Herstellung eingeschmolzen werden, wodurch Hohlräume entstehen. Aufgrund der während des Einschmelzen entstehenden Dämpfe ist es notwendig bei der Herstellung kostenintensive Filter etc. zu verwenden um hier eine Umweltbelastung zu vermeiden.

Die DE 4433103 A1 beschreibt ein schallabsorbierendes poröses Bauteil, welches durch die Verwendung von geblähtem oder aufgeschäumten Glas als Material gekennzeichnet ist. Das Schaumglas kann als trockene, lose Schüttung in die vorbereitete Form eingebracht werden, oder mit Hilfe eines flüssigen anorganischen Bindemittels zunächst in eine Form des Bauteils gegossen werden, worin es dann aushärtet. Eine Versinterung des Materials ist ebenfalls möglich. Folglich wird hier lediglich die seit langem bekannte allgemeine Verwendung von Bläh- oder Schaumglas als Material, u.a. unter Mithilfe eines anorganischen Bindemittels, für ein schallabsorbierendes, angeblich höchsten Brandschutzanforderungen genügendes Bauteil offenbart. Der Fachmann erhält keine konkreten Hinweise zur Umsetzung eines solchen Bauteils, insbesondere kein Hinweis auf ein geeignetes Bindemittel, welches bei den eingesetzten porösen Bläh- und insbesondere Schaumgläsem, bedingt durch das starke Saugverhalten der offenporigen Strukturen, zur Lösung von auftretenden Verbundfestigkeitsproblemen führt.

Die DE 198 05 365 beansprucht ein Verfahren zur Herstellung von wärme- und/oder schalldämmenden und feuchtigkeitsregulierenden Formkörpem oder Schichten, bei dem ein aus einem Gemisch aus 40 bis <100 Masse-% Alphahalbhydrat und / oder Anhydrid und >0 bis 60 Masse-% reaktiver Asche aus Verfeuerungsanlagen bestehendes Bindemittel, ein Füllstoffgemisch aus Bauresten aus Beton und Ziegelsplitt und Polystyrolflocken, sowie wenigstens ein Zusatzmittel mittels eines Mischers mit Wasser vermengt und die Mischung anschließend in einer Form durch Pressen oder durch Stampfen in die gewünschte endgültige Form gebracht oder großflächig auf Decken aufgebracht wird, besteht. Mittels dieses Verfahrens sind u.a. schalldämmende und feuchtigkeitregulierende Formkörper herstellbar. Hierbei weisen die verwendeten mineralischen Einsatzstoffe nur geringe schallabsorbierende Eigenschaften auf, so dass über den höheren Polystyrolanteil eine Schalldämmung erreicht werden muss, wodurch gleichzeitig die Brandschutzeigenschaften deutlich schlechter werden. Ferner wird durch den Einsatz von reaktiven Aschen, mineralischen Füllstoffen und insbesondere durch Polystyrolflocken die feuchtigkeitsregulierende Wirkung erheblich gesenkt.

Zusammenfassend ist festzuhalten, dass seit langer Zeit insbesondere auf dem Gebiet der Wand- und Deckenverkleidung umfangreiche Forschung betrieben wurde. Hierbei ist es immer wieder gelungen Platten bereitzustellen, die im Hinblick auf bestimmte Anforderungen gute Eigenschaften aufweisen. Bezüglich einer Kombination verschiedenster Eigenschaften in einem einzelnen Produkt, vermögen die bekannten Formteile es jedoch nicht, jeweils optimierte Eigenschaften (Brand-, Schallschutz, Raumklima) zur Verfügung zu stellen, sondern die Optimierung eines Merkmales findet häufig zu Lasten eines anderen statt. Die bekannten Platten sind zumeist kostenintensiv in ihrer Herstellung, insbesondere auch aufgrund der eingesetzten Materialien, aufgrund des hohen Gewichtes schwierig in der Handhabung und Montage, wodurch z.B. stabilere Aufhängungen erforderlich werden.

Die Aufgabe der vorliegenden Erfindung ist es daher ein Formteil zur Verfügung zu stellen, welches die aus dem Stand der Technik bekannten Nachteile überwindet, und welches relativ kostengünstig herstellbar ist. Eine weitere Aufgabe der vorliegenden Erfindung ist es, ein wahlweise dis-, halb- oder kontinuierliches Verfahren zur Herstellung von solchen Formteilen zur Verfügung zu stellen.

Diese Aufgabe wird in bezug auf das Formteil durch ein nicht brennbares, schnell feuchtigkeitsregulierendes, und schallabsorbierendes Formteil aus einem Füllstoff, gewählt aus einem Mineralschaumgranulat und / oder Blähglas und / oder expandiertem Mineral gelöst, umfassend eine Mischung aus wenigstens einem der vorgenannten Füllstoffe mit einer vorbestimmten Korn- bzw. Partikelgrößenverteilung und / oder einer vorbestimmten Porosität, wobei der wenigstens eine Füllstoff unter Verwendung eines nicht brennbaren, anorganischen Bindemittels oder Bindemittelgemischs, ggf. unter Einsatz von Hilfsstoffen, gebunden ist.

Das erfindungsgemäße Formteil zeichnet sich insbesondere durch eine Kombination verschiedenster Eigenschaften aus, d.h. durch erhöhte Brandschutz- und bauphysikalischen Anforderungen und eine schnell feuchtigkeitsregulierende, sowie schallabsorbierende Eigenschaft, insbesondere im für den Einsatz im Innenraum wichtigen Bereich von 125 -1000 Hz, sowie durch eine gute mechanische Festigkeit, insbesondere Biegezugfestigkeit. Durch diese Eigenschaftenkombination ist das erfindungsgemäße Formteil insbesondere als Decken- oder Wandplatte für den Einsatz im Innenausbau geeignet. Zusätzlich zeichnet sich das erfindungsgemäße Formteil durch ein vorteilhaftes Erscheinungsbild (vorzugsweise weiße Anmutung) und eine gute Haptik aus.

Hierbei lassen sich die erfindungsgemäßen Formteile aus besonders kostengünstigen und ökologisch verträglichen Herstellverfahren und Rohstoffe, d.h. z.B. altglashaltige Mineralschaumgranulate, sowie ggf. REA-Gips aus der Rauchgasentschwefelung, herstellen, so dass das fertiggestellte Formteil kostengünstig und umweltverträglich hergestellt werden kann.

Das erfindungsgemäße Formteil zeichnet sich femer durch eine hohe, bis zu dreimal höhere Feuchtigkeitsaufnahme verglichen mit z.B. herkömmlichen Deckenplatten und eine schnelle feuchtigkeitsregulierende Wirkung bei großflächigem Einsatz in niedrigen Konferenzräumen, Büros etc. aus und sorgt damit in Kombination mit den guten Akustikeigenschaften für ein besonders gutes und gesundheitsförderliches Raum- und Arbeitsklima (Verminderung von Bronchialinfekten, Stress etc.).

Gemäß einer bevorzugten Ausführungsform erfüllt das Formteil die Eigenschaften einer Brandklasse A, A1 und/oder A2 und / oder eine Feuerwiderstandsfähigkeit von gleich oder besser F30, vorzugsweise F90.

Vorteilhafterweise kann die Mischung aus a) 50 - 95 Masse-%, vorzugsweise 55 - 75 Masse-% des wenigstens einen Füllstoffs, b) 5 - 50 Masse-%, vorzugsweise 10-40 Masse-% Bindemittel und c) 0,1 - 5 Masse-% Hilfsstoffe und Additive, bestehen. Diese Mischung hat sich in der Praxis zur Erzielung der beabsichtigten Eigenschaftskombination besonders bewährt.

Gemäß einer besonders bevorzugten Ausführungsform kann das Bindemittel bzw. Bindemittelgemisch aus einem Kalziumsulfat, insbesondere einem -Halbhydrat und / oder -Anhydrid, bestehen, und gegebenenfalls Zuschlagstoffe und Hilfsstoffe, insbesondere Verzögerer, Fließmittel, Stabilisatoren und Wasserzusatz, enthalten. Durch den Einsatz von Kalziumsulfat ist es möglich, Formteile mit hoher Festigkeit zu erzielen. Ferner zeichnet sich dieses Bindemittel durch vorteilhafte maschinelle Verarbeitungseigenschaften auf, schwindet oder quillt praktisch nicht, bindet schnell mit hoher Festigkeit ab, erreicht damit kurze Zykluszeiten, und ist beige bis altweiß, vorzugsweise weiß in der Farbe, sowie nicht brennbar. Bei geeignetem Wasserfeststoffwert erreicht das Alpha-Halbhydrat bis zu 60 N / mm² Druckfestigkeit binnen 24h, z.B. gegenüber Zement im Bereich von nur 35-40 N / mm² nach 28 Tagen.

Des weiteren können zusätzliche feuchtigkeitsregulierende Bindemittelanteile und Hilfsstoffe bzw. Additive, insbesondere Ton, Lehm, Polyacrylsäuren, enthalten sein, um die feuchtigkeitsregulierende Eigenschaft des Formteiles noch weiter zu verbessern. Die maximale Menge dieser Hilfsstoffe wird durch die erforderliche Festigkeit des jeweiligen Formteils bestimmt, die nicht unterschritten werden sollte.

Vorteilhafterweise kann der mittlere Durchmesser der Teilchen bzw. des Granulats des wenigstens einen Füllstoffs im Bereich von ungefähr 0,1 mm bis ca. 20 mm liegen, vorzugsweise zwischen 0,5 - 4 mm und das Schüttgewicht des wenigstens einen Füllstoffs zwischen ca. 20g/I bis ca. 800 g/l, betragen. Diese Werte haben sich in der Praxis als besonders geeignet herausgestellt.

Eine weitere Ausführungsform kann vorsehen, dass die Mischung wenigstens zwei Füllstoffe mit unterschiedlichen mittleren Durchmessern enthält. Hierdurch ist es möglich das Gewicht des Formteiles zu verringern, da sich der Füllstoff mit dem geringeren Durchmesser zwischen dem Füllstoff mit dem größeren Durchmesser ansammelt bzw. lagert, so dass weniger Bindemittel benötigt wird. Gleichzeitig kann auch eine ebenere Oberfläche erzielt werden, die einerseits für den Einsatz im Innenausbau geeignet ist, also optische Anforderungen erfüllt und andererseits durch die glattere Oberfläche eine bessere Bindung an eine Armierung und/oder zusätzliche Glasfaserschicht ermöglich, wobei die bei der Anbringung einer Armierung und/oder Glasfaserschicht notwendige Klebe- bzw. Bindemittelmenge zwischen dem Formteil und der zusätzlichen Schicht deutlich gesenkt werden kann.

Als besonders geeignet hat es sich erwiesen, wenn der wenigstens eine Füllstoff überwiegend offenporig ist. Auf diese Weise wird eine besonders gute Schallabsorption und gute Verbindung zwischen dem Füllstoff und dem Bindemittel erzielt.

Vorteilhafterweise kann der wenigstens eine Füllstoff gewählt sein aus der Gruppe umfassend: Keralight®, Keraplus®, Keraglas®, Keraton®, Kerabims®, Perlithen, Blähtonen, Blähschiefem, Glashohlkugeln, Glasschaumpartikeln, leichten mineralischen oder keramischen Körpern, und dergleichen, insbesondere Keraplus® und Keraglas®. Diese Materialien erfüllen hierbei die an die Füllstoffe gestellten Anforderungen, insbesondere in Bezug auf ihr Gewicht, ihre Umweltverträglichkeit, Festigkeit etc..

Gemäß einer weiteren Ausführungsform kann das Formteil als Platte ausgebildet sein. Diese Form ist insbesondere zur Verwendung im Innenausbau von Vorteil.

Hierbei kann die Platte zwei oder mehr miteinander verbundene Schichten umfassen, wobei sich die Zusammensetzung jeder Schicht voneinander unterscheidet. Durch den Einsatz zweier miteinander verbundener Schichten ist es möglich die Eigenschaften jeder Schicht gesondert auszuwählen, um so das Eigenschaftenprofil danach einzustellen, insbesondere die Schallabsorption oder Feuchtigkeitsregulation oder natürliche Terracotta ähnlichen Anmutung bei Lehmschichten, abhängig davon ob die Seite der Decke oder dem Innenraum eines Zimmers zugewandt ist. Z.B. können bezüglich der zur Decke gewandten Platte andere Bindemittel eingesetzt werden, die z.B. keine weiße Optik bereitstellen.

Ferner kann die Ober- und/oder Unterseite des Formteils mit einem Gewebe und/oder einem -flies, vorzugsweise einem nicht brennbarem Gewebe und/oder -flies, insbesondere aus Glasfaser versehen sein. Hierbei kann das Glas- oder Mineralfasermaterial beschichtet oder unbeschichtet sein und vorzugsweise ein Flächengewicht im Bereich von 20g bis 600g/qm aufweisen.
Vorteilhafterweise kann das Bindemittel zusätzlich Farbpigmente, Hilfsstoffe und Konservierungsstoffe enthalten, insbesondere Titandioxid, Dispersionen, antibakterielle und fungizide Wirkstoffe, und dergleichen.

Gemäß weiterer Ausführungsformen kann das Formteil auf seiner Oberfläche mit einer zusätzlichen Beschichtung und / oder einem Druck, und / oder einer Lackierung, versehen sein. Der Druck kann z.B. als Siebdruck und die Lackierung als Inmould-Coating durchgeführt werden. Femer kann das Formteil auf seiner Oberfläche zusätzlich mit einem Putz, vorzugsweise einem Akustikputz, versehen sein. Darüber hinaus ersetzt das erfindungsgemäße Formteil herkömmliche Polystyrol-Struktur- und Kassettendecken, wenn die Oberfläche des Formteiles mit dekorativen Strukturen oder einem Relief versehen ist. Diese vorgenannten Ausführungsformen haben sich in der Praxis insbesondere für die Verwendung im Innenausbau besonders geeignet erwiesen. Hierbei ist es möglich durch die Wahl der Oberflächenstruktur die schallabsorbierenden Eigenschaften weiter zu verbessem.

Ferner kann das Formteil in einer üblichen Deckenabhängung im wesentlichen unbefestigt eingebracht, bezogen auf sein Eigengewicht ausreichend druck- und luftdurchlässig sein, um auftretende Druckschwankungen zwischen Innenraum und Zwischendecke auszugleichen, ohne selbst dadurch wesentlich bewegt zu werden.

Vorteilhafterweise kann das Formteil des weiteren mit eingelegten oder aufgebrachten gesonderten Elemente, insbesondere Dekor-, Funktions- und/oder Befestigungsmittel versehen werden. Hierdurch wird z.B. die Befestigung der Formteile vereinfacht.

Femer kann das Formteil durch geeignete Auswahl der einzelnen Bestandteile eine gute elektromagnetische Abschirmung aufweisen, die ausgehend von Leuchtstofflampen, Stromleitungen, Ventilatoren eingestellt wird.

Bezüglich des Verfahrens zur Herstellung von nicht brennbaren, feuchtigkeitsregulierenden und schallabsorbierenden Formkörpern aus einem Füllstoff, gewählt aus einem Mineralschaumgranulat und / oder Blähglas und / oder expandiertem Mineral, umfassend eine Mischung aus wenigstens einem der vorgenannten Füllstoffe, einem anorganischen Bindemittel oder einem Bindemittelgemisch und ggf. Hilfsstoffen und Additive, wird die Aufgabe durch ein Verfahren umfassen die folgenden Schritte gelöst: Dosieren der einzelnen Bestandteile der Mischung, sowie Wasser jeweils getrennt voneinander und Vormischen und/oder mahlen derselben über einen vorbestimmten Zeitraum, Einführen der einzelnen dosierten Bestandteile in ein Gefäß oder Hauptmischer derselben über einen vorbestimmten Zeitraum, Einführen der Mischung in eine vorbereitete Form, Verteilen und Verdichten der Mischung in der Form, nach Erreichung der Entformzeit Ausformen des Formteils und Aushärten desselben bei geeigneter Temperatur oder Aushärten des Formteils bei geeigneter Temperatur in der Form und Ausformen, und gegebenenfalls Bearbeiten bzw. Behandeln des ausgehärteten Formteils. Hierbei kann die Dosierung und Mischung gleichzeitig in dem Hauptmischer erfolgen.

Vorteilhafterweise kann das Verfahren kontinuierlich durchgeführt werden und eignet sich somit für eine kostengünstige Fließbandherstellung, ohne dass Zwischenprodukte zwischengelagert werden müssen.

Hierbei kann die Dosierung der Mischung kontinuierlich unter Verwendung einer ein Förderband aufweisenden Fördereinrichtung durchgeführt werden, wobei ein Trennmittel, wie Folien oder Papiere vor und/oder nach der Dosierung zugeführt wird, wodurch eine Schichtstruktur kontinuierlich aufgebaut und verdichtet wird und wobei die Fördereinrichtung des weiteren Einrichtungen zur Ausbildung von Formkörpem bzw. Platten Bereiche und Einrichtungen zur Mittel-Zuführung, Mischungsdosierung, Verdichtung und gegebenenfalls zur Trocknung bzw. Härtung, Beschichtung bzw. Bedruckung und Abtrennung bzw. Vereinzelung der Formköper aufweist.

Als besonders vorteilhaft hat sich ferner erwiesen, wenn das Formteil in oder außerhalb der Form bei erhöhter Temperatur gehärtet und / oder getrocknet wird, insbesondere unter Verwendung von Heißluft, Infrarot- oder Mikrowellenstrahlern. Auf diese Weise wird eine schnelle Härtung bzw. Trocknung ermöglicht, so dass sich die Herstellungsdauer deutlich verringert.

Hierbei kann die Form und/oder Fördereinrichtung mit einer Antihaftbeschichtung ausgekleidet werden und / oder mit einem Trennmittel vorbehandelt werden und / oder ein Trennelement z.B. eine Folie oder Papier zwischen Formteilmischung und Form bzw. Förderband eingelegt wird. Hierdurch wird eine verbesserte Entformung des fertigen Formteils aus der Form gewährleistet.

Vorteilhafterweise kann vor und/oder nach dem Schritt des Einführens der Mischung in die Form, ein Gewebe oder Flies, insbesondere aus Glasfaser, welches vorzugsweise vorab mit Bindemittel oder anderen Flüssigkeiten, wie Wasser, getränkt oder benetzt wird, eingelegt werden. Durch diese Maßnahme ist es möglich eine gezielte Schichtstruktur auszubilden, oder das Formteil gezielt mit einer Oberflächenschicht zu versehen. Da die Mischung direkt auf das Gewebe oder dergleichen aufgebracht wird, kann eine gute Verbindung zwischen dem Gewebe und der Mischung erzielt werden, so dass ein entsprechendes Formteil kostengünstiger und mit weniger Herstellungsschritten hergestellt werden kann.

Gemäß einer weiteren bevorzugten Ausführungsform kann die Form oder das Förderband der Fördereinrichtung mit einer glatten oder strukturierten Plattengeometrie ausbildet sein. Wird die Mischung auf eine entsprechend ausgestaltete Oberfläche aufgebracht nimmt diese direkt die entsprechende Oberflächenstruktur an, so dass die strukturierte Oberflächenschicht kostengünstig , ohne zusätzliche Verfahrensschritte erzielt werden kann.

Die vorliegende Erfindung wird im folgenden anhand eines bevorzugten Ausführungsbeispieles unter Bezugnahme auf die beigefügte Zeichnung näher erläutert. Es zeigt:
- Fig. 1: eine Kurve, welche das Ergebnis eines Feuerbeständigkeitsversuches darstellt, und
- Fig. 2: das Ergebnis eines weiteren Feuerbeständigkeitsversuches.

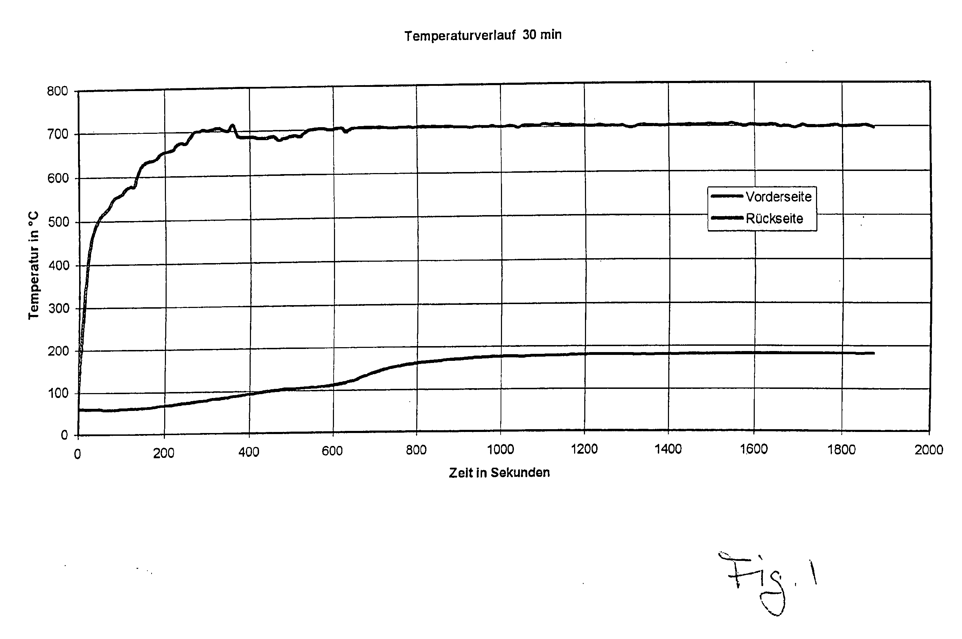

### Beispiel

Proben wurden unter Verwendung der folgenden Mischung hergestellt.
a) Füllstoffe:
   423g Blähglas 0,5 - 1 mm
   261g Blähglas 1-2 mm
b) Bindemittelmischung
   500 g Alphahalbhydrat
   1,12 g Verflüssiger
   0,09 g Verzögerer
   0,4 g Stabilisator
   280 g Wasser

Hierbei wurden zunächst die beiden Füllstoffe abgewogen oder volumetrisch dosiert und anschließend vermischt. Getrennt hiervon wurde das Alphahalbhydrat mit den Hilfsstoffen trocken vorgemischt und diese Trockenmischung anschließend mit dem Wasser vermischt. Nachfolgend wurden die Füllstoffe der flüssigen Bindemittelmischung zusammengeführt und vermischt. Die erzeugte Mischung wurde in eine vorbereitete Form, die mit Bindemittel benetztem Glasfaserflies als Ober- und Unterschicht ausgekleidet war, eingefüllt und bei Raumtemperatur ausgehärtet. Die Entformung erfolgte nach 30 min. Diese Dauer kann durch geeignete Zugabe von Verzögeren eingestellt werden und liegt vorzugsweise bei 15 bis 20 min..

Die solchermaßen hergestellten Proben wiesen folgende Abmessungen auf: Dicke 16mm, Länge 400 mm, Breite 400mm. Dichte der Platte betrug ca. 400 g/l inkl. Glasfaserflies an Ober- und Unterseite.

Die Proben wurden anschließend einer Prüfung der Feuerbeständigkeit unterworfen. Hierbei wurde die Probe mit einer Flüssiggasflamme so beaufschlagt, dass die Temperatur der Vorderseite T= 700°C betrug. Für die Zeitdauer des Versuches (Versuch 1 30 min; Versuch 2 90 min) wurde die Temperatur der Vorder- und Rückseite mittels Thermoelementen des Typs K messtechnisch erfasst. An der Rückseite des Materials lag natürliche Konvektion vor.

Die in den Kurven gezeigten Ergebnisse zeigen , dass das Material eine sehr gute Feuerwiderstandsklasse (F90 Test) aufweist.

Erfindungsgemäß werden durch die Haufwerksporigkeit und die verwendeten vorzugsweise auch feuchtigkeitsabgebende Bindemittel die thermischen Spannungen im Formteil durch langsames Erwärmen vermindert bzw. gleichmäßiger verteilt und aufgenommen und es kommt nicht zu einem Sprödbruch mit Flammendurchschlag. Femer wurden an entsprechenden Proben Untersuchungen der akustischen Kennwerte durchgeführt.

Die Bestimmung des Schallabsorptionsgrades erfolgte an stehenden Wellen im Kundschen Rohr. Die Schallabsorptionsmessungen wurden dabei für den Frequenzbereich 100 -1600 Hz an Proben mit einem Durchmesser von 100 mm und im Frequenzbereich 500 - 6400 Hz an Proben mit einem Durchmesser von 30 mm durchgeführt.

Das Material zeigte ein Frequenzabhängiges Absorptionsverhalten. Die mittleren Schallabsorptionskoeffizienten der für die akustische Bewertung relevanten Frequenzen sind in der nachfolgenden Tabelle 1 aufgelistet.

| Probe | Schallabsorptionsgrad αₛ bei Frequenz (Hz) | | | | | |
|---|---|---|---|---|---|---|
| | 125 | 250 | 500 | 1000 | 2000 | 4000 |
| dicke Platte mit Glasvlies | 0,08 | 0,18 | 0,55 | 0,42 | 0,50 | 0,61 |
| dicke Platte ohne Glasvlies | 0,04 | 0,10 | 0,20 | 0,74 | 0,75 | 0,60 |
| dünne Platte mit Glasvlies | 0,03 | 0,05 | 0,10 | 0,45 | 0,61 | 0,78 |

Die Messergebnisse zeigen sehr gute Akustik Messwerte insbesondere in dem Wirkungsmaximum für Akustikdecken in Wohn- und Arbeitsräumen, in denen Frequenzen von 125 -100 Hz üblicherweise nur schlecht absorbiert werden.

## Patentansprüche

1. Nicht brennbares, feuchtigkeitsregulierendes und schallabsorbierendes Formteil aus einem Füllstoff, gewählt aus einem Mineralschaumgranulat und / oder Blähglas und / oder expandiertem Mineral, umfassend eine Mischung aus wenigstens einem der vorgenannten Füllstoffe mit einer vorbestimmten Kom- bzw. Partikelgrößenverteilung und / oder einer vorbestimmten Porosität, wobei der wenigstens eine Füllstoff unter Verwendung eines nicht brennbaren, anorganischen Bindemittels oder Bindemittelgemischs, ggf. unter Einsatz von Hilfsstoffen, gebunden ist.

2. Formteil nach Anspruch 1, **dadurch gekennzeichnet, dass** das Formteil die Eigenschaften einer Brandklasse A, A1 und/oder A2 und / oder eine Feuerwiderstandsfähigkeit von gleich oder besser F30, vorzugsweise F90 erfüllt.

3. Formteil nach Anspruch 1 oder 2, **dadurch gekennzeichnet, dass** die Mischung aus a) 50 - 95 Masse-%, vorzugsweise 55 - 75 Masse-% des wenigstens einen Füllstoffs, b) 5 - 50 Masse-%, vorzugsweise 10-40 Masse-% Bindemittel und c) 0,1-5 Masse-% Hilfsstoffe und Additive, besteht.

4. Formteil nach einem der Ansprüche 1 bis 3, **dadurch gekennzeichnet, dass** das Bindemittel bzw. Bindemittelgemisch aus einem Kalziumsulfat, insbesondere einem -Halbhydrat und / oder -Anhydrid, besteht, und gegebenenfalls Zuschlagstoffe und Hilfsstoffe, insbesondere Verzögerer, Fließmittel, Stabilisatoren und Wasserzusatz, enthält.

5. Formteil nach einem der Ansprüche 1 bis 3, **dadurch gekennzeichnet, dass** das Bindemittel gewählt ist aus der Gruppe umfassend Alkali- und Erdalkalisilikate, Phosphatbinder, hydraulische , Magnesiabinder und keramische Schlicker.

6. Formteil nach einem der Ansprüche 1 bis 5, **dadurch gekennzeichnet, dass** zusätzliche feuchtigkeitsregulierende Bindemittelanteile und Hilfsstoffe bzw. Additive, insbesondere Ton, Lehm, Polyacrylsäuren, enthalten sind.

7. Formteil nach einem der Ansprüche 1 bis 6, **dadurch gekennzeichnet, dass** der mittlere Durchmesser der Teilchen bzw. des Granulats des wenigstens einen Füllstoffs im Bereich von ungefähr 0,1 mm bis ca. 20 mm liegt, vorzugsweise zwischen 0,5 - 4 mm und dass das Schüttgewicht des wenigstens einen Füllstoffs zwischen ca. 20g/l bis ca. 800 g/l, beträgt.

8. Formteil nach einem der Ansprüche 1 bis 7, **dadurch gekennzeichnet, dass** die Mischung wenigstens zwei Füllstoffe mit unterschiedlichen mittleren Durchmessern enthält.

9. Formteil nach einem der Ansprüche 1 bis 8, **dadurch gekennzeichnet, dass** der wenigstens eine Füllstoff überwiegend offenporig ist.

10. Formteil nach einem der Ansprüche 1 bis 9, **dadurch gekennzeichnet, dass** der wenigstens eine Füllstoff gewählt ist aus der Gruppe umfassend: Keralight®, Keraplus®, Keraglas®, Keraton®, Kerabims®, Perlithen, Blähtonen, Blähschiefern, Glashohlkugeln, Glasschaumpartikeln, leichten mineralischen oder keramischen Körpern, und dergleichen, insbesondere Keraplus® und Keraglas®.

11. Formteil nach einem der Ansprüche 1 bis 10, **dadurch gekennzeichnet, dass** das Formteil als Platte ausgebildet ist.

12. Formteil nach Anspruch 11, **dadurch gekennzeichnet, dass** die Platte zwei oder mehr miteinander verbundene Schichten umfasst, wobei sich die Zusammensetzung jeder Schicht voneinander unterscheidet.

13. Formteil nach Anspruch 11 oder 12, **dadurch gekennzeichnet, dass** die Oberund/oder Unterseite des Formteils mit einem Gewebe und/oder einem -flies, vorzugsweise einem nicht brennbarem Gewebe und/oder -flies, insbesondere aus Glasfaser versehen ist.

14. Formteil nach Anspruch 13, **dadurch gekennzeichnet, dass** das Glas- oder Mineralfasermaterial beschichtet oder unbeschichtet ist und vorzugsweise ein Flächengewicht im Bereich von 20g bis 600g/qm aufweist.

15. Formteil nach einem der Ansprüche 1 bis 14, **dadurch gekennzeichnet, dass** das Bindemittel zusätzlich Farbpigmente, Hilfsstoffe und Konservierungsstoffe enthält, insbesondere Titandioxid, Dispersionen, antibakterielle und fungizide Wirkstoffe, und dergleichen.

16. Formteil nach einem der Ansprüche 1 bis 15, **dadurch gekennzeichnet, dass** das Formteil auf seiner Oberfläche mit einer zusätzlichen Beschichtung und / oder einem Druck, und / oder einer Lackierung, versehen ist.

17. Formteil nach einem der Ansprüche 1 bis 16, **dadurch gekennzeichnet, dass** das Formteil auf seiner Oberfläche zusätzlich mit einem Putz, vorzugsweise einem Akustikputz, versehen ist.

18. Formteil nach einem der Ansprüche 1 bis 17, **dadurch gekennzeichnet, dass** die Oberfläche des Formteiles mit dekorativen Strukturen oder einem Relief versehen ist.

19. Formteil nach Anspruch 1 bis 18, **dadurch gekennzeichnet, dass** es in einer üblichen Deckenabhängung im wesentlichen unbefestigt eingebracht, bezogen auf sein Eigengewicht ausreichend druck- und luftdurchlässig ist, um auftretende Druckschwankungen zwischen Innenraum und Zwischendecke auszugleichen, ohne selbst dadurch wesentlich bewegt zu werden.

20. Formteil nach Anspruch 19 , **dadurch gekennzeichnet, dass** das Formteil des weiteren eingelegte oder aufgebrachte gesonderte Elemente, insbesondere Dekor-, Funktions- und/oder Befestigungsmittel enthält.

21. Formteil nach einem der Ansprüche 1 bis 20, **gekennzeichnet durch** eine gute elektromagnetische Abschirmung.

22. Verfahren zur Herstellung von nicht brennbaren, feuchtigkeitsregulierenden und schallabsorbierenden Formkörpem aus einem Füllstoff, gewählt aus einem Mineralschaumgranulat und / oder Blähglas und / oder expandiertem Mineral, umfassend eine Mischung aus wenigstens einem der vorgenannten Füllstoffe, einem anorganischen Bindemittel oder einem Bindemittelgemisch und ggf. Hilfsstoffen und Additive, umfassen die folgenden Schritte:
- Dosieren der einzelnen Bestandteile der Mischung, sowie Wasser jeweils getrennt voneinander und Vormischen und/oder mahlen derselben über einen vorbestimmten Zeitraum
- Einführen der einzelnen dosierten Bestandteile mittels eines Gefäßes oder mittels eines Hauptmischers über einen vorbestimmten Zeitraum,
- Einführen der Mischung in eine vorbereitete Form,
- Verteilen und Verdichten der Mischung in der Form,
- nach Erreichung der Entformzeit Ausformen des Formteils und Aushärten desselben bei geeigneter Temperatur oder Aushärten des Formteils bei geeigneter Temperatur in der Form und Ausformen, und
- gegebenenfalls Bearbeiten bzw. Behandeln des ausgehärteten Formteils.

23. Verfahren zur Herstellung von Formteilen nach Anspruch 22, **dadurch gekennzeichnet, dass** das Verfahren kontinuierlich durchgeführt wird.

24. Verfahren zur Herstellung von Formteilen nach einem der Ansprüche 22 oder 23, **dadurch gekennzeichnet, dass** die Dosierung der Mischung kontinuierlich auf einer ein Förderband aufweisenden Fördereinrichtung erfolgt, wobei flächige Trenn- und Armierungsmittel, wie Folien, Papiere oder Glasfasergewebe vor und/oder vor bzw. nach der Dosierung auf das Förderband zugeführt werden, wodurch eine Schichtstruktur kontinuierlich aufgebaut und diese verdichtet wird und wobei die Fördereinrichtung des weiteren Einrichtungen zur Herstellung von Formkörpem bzw. Platten, Bereiche und Einrichtungen zur Mittel-Zuführung, Mischungsdosierung, Verdichtung und zur Trocknung bzw. Härtung, Beschichtung bzw. Bedruckung und Abtrennung bzw. Vereinzelung der Formköper aufweist.

25. Verfahren nach einem der Ansprüche 22 bis 24, **dadurch gekennzeichnet, dass** das Formteil in oder außerhalb der Form bei erhöhter Temperatur gehärtet und / oder getrocknet wird, insbesondere unter Verwendung von Heißluft, Infrarot- oder Mikrowellenstrahlem.

26. Verfahren nach einem der Ansprüche Anspruch 22 bis 25, **dadurch gekennzeichnet, dass** die Form und/oder Fördereinrichtung mit einer Antihaftbeschichtung ausgekleidet wird und / oder mit einem Trennmittel vorbehandelt wird und / oder ein Trennelement z.B. eine Folie zwischen Formteilmischung und Form bzw. Förderband eingelegt wird.

27. Verfahren nach Anspruch 22 bis 26, **dadurch gekennzeichnet, dass** vor und/oder nach dem Schritt des Einführens der Mischung in die Form, in die Form ein Gewebe oder Flies, insbesondere aus Glasfaser, welches vorzugsweise vorab mit Bindemittel oder anderen Flüssigkeiten, wie Wasser, getränkt oder benetzt wird, eingelegt oder zugeführt wird.

28. Verfahren nach einem der Ansprüche 22 bis 27, **dadurch gekennzeichnet, dass** die Form oder das Förderband der Fördereinrichtung mit einer glatten oder strukturierten Plattengeometrie ausbildet wird.

29. Verfahren nach einem der Ansprüche 22 bis 28, **dadurch gekennzeichnet, dass** in vor dem Schritt des Einführens der Mischung in die Form oder auf das Förderband vorab eine Beschichtung aufgebracht wird.

30. Verfahren nach einem der Ansprüche 22 bis 29, **dadurch gekennzeichnet dass** in die Form oder die Fördereinrichtung vor oder nach Zugabe der Mischung auf das Formteil zu einem geeigneten Zeitpunkt Dekor-, Funktions- oder Befestigungselemente, wie Rast- oder Schnappmittel, eingelegt und/oder angebracht werden.

31. Verfahren nach einem der Ansprüche 22 bis 30, **dadurch gekennzeichnet, dass** eine Mischung bestehend aus a) 50 - 95 Masse-%, vorzugsweise 55 - 75 Masse-% wenigstens eines Füllstoffs, b) 5 - 50 Masse-%, vorzugsweise 10-40 Masse-% Bindemittel und c) 0,1 - 5 Masse-% Hilfsstoffe und Additive, verwendet wird.

32. Verfahren nach einem der Ansprüche 22 bis 31, **dadurch gekennzeichnet, dass** ein Bindemittel bzw. Bindemittelgemisch aus einem Kalziumsulfat, insbesondere einem -Halbhydrat und / oder -Anhydrid, verwendet wird, welches gegebenenfalls Zuschlagstoffe und Hilfsstoffe, insbesondere Verzögerer, Fließmittel, Stabilisatoren und Wasserzusatz, enthält.

33. Verfahren nach einem der Ansprüche 22 bis 32, **dadurch gekennzeichnet, dass** zusätzliche feuchtigkeitsregulierende Bindemittelanteile und Hilfsstoffe bzw. Additive, insbesondere Ton, Lehm, Polyacrylsäuren, zu der Mischung zugegeben werden.

34. Verfahren nach einem der Ansprüche 22 bis 33, **dadurch gekennzeichnet, dass** der mittlere Durchmesser des wenigstens einen Füllstoffs in einem Bereich von ungefähr 0,1 mm bis ca. 20 mm gewählt wird, vorzugsweise zwischen 0,5 - 4 mm und dass das Schüttgewicht des wenigstens einen Füllstoffes zwischen ca. 20g/l bis ca. 800 g/l beträgt.

35. Verfahren nach einem der Ansprüche 22 bis 34, **dadurch gekennzeichnet, dass** in der Mischung wenigstens zwei Füllstoffe mit unterschiedlichen mittleren Durchmessern verwendet werden.

36. Verfahren nach einem der Ansprüche 22 bis 35, **dadurch gekennzeichnet, dass** der wenigstens eine Füllstoff überwiegend offenporig ausgebildet ist.

37. Verfahren nach einem der Ansprüche 22 bis 36, **dadurch gekennzeichnet, dass** der Füllstoff gewählt ist aus der Gruppe umfassend: Keralight®, Keraplus®, Keraglas®, Keraton®, Kerabims®, Glashohlkugeln, Glasschaumpartikeln, leichten keramischen Körpem, Perlithen, Blähtonen, Blähschiefem und ähnliche, insbesondere Keraplus® und Keraglas®.

38. Verfahren nach einem der Ansprüche 22 bis 37, **dadurch gekennzeichnet, dass** Formteil die Platte zwei oder mehr Schichten umfasst, wobei sich die Zusammensetzung jeder Schicht voneinander unterscheidet

39. Verfahren nach einem der Ansprüche 22 bis 38, **dadurch gekennzeichnet, dass** das Formteil an einer Platte, einer Trageschicht oder einem Gerüst, wie einem Lochblech befestigt wird.

40. Verfahren nach einem der Ansprüche 22 bis 39, **dadurch gekennzeichnet, dass** die Ober- und/oder Unterseite des Formteils mit einem nicht brennbarem Gewebe und/oder einem -flies, insbesondere Glasfaser versehen wird, wobei das Glasoder Mineralfasermaterial beschichtet oder unbeschichtet ist und vorzugsweise ein Flächengewicht im Bereich von 20g bis 600g/qm aufweist.

41. Verfahren nach einem der Ansprüche 22 bis 40, **dadurch gekennzeichnet, dass** dem Bindemittel zusätzlich Farbpigmente, Hilfsstoffe und Konservierungsstoffe zugesetzt werden, insbesondere Titandioxid, Dispersionen, antibakterielle und fungizide Wirkstoffe, und dergleichen.

42. Verfahren nach einem der Ansprüche 22 bis 41, **dadurch gekennzeichnet, dass** das Formteil in einem weiteren Schritt auf seiner Oberfläche mit einer zusätzlichen Beschichtung und / oder einem Druck, z.B. Siebdruck, und / oder einer Lackierung versehen wird.

43. Verfahren nach einem der Ansprüche 22 bis 42, **dadurch gekennzeichnet, dass** das Formteil auf seiner Oberfläche zusätzlich mit einem Putz, vorzugsweise einem Akustikputz, versehen wird.

44. Verfahren nach einem der Ansprüche 22 bis 43, **dadurch gekennzeichnet, dass** die Oberfläche des Formteils mit einer dekorativen Struktur oder einem Relief durch Formgebung ausgebildet wird.

45. Verfahren nach einem der Ansprüche 22 bis 44, **dadurch gekennzeichnet, dass** durch den Aufbau und die Wahl der Füllstoffe eine gute elektromagnetische Abschirmung am Formteil eingestellt wird.
